# EUROPEAN PATENT APPLICATION

(11) **EP 4 421 903 A1**
(43) Date of publication of application: **28.08.2024**
(21) Application number: 21961520.0
(22) Date of filing: 17.11.2021
(51) Int. Cl.: H01M 4/36, H01M 4/38, H01M 4/62, H01M 10/052, B22F 9/08, H01M 50/109, H01M 4/02

(54) **NEGATIVE ELECTRODE ACTIVE MATERIAL FOR LITHIUM SECONDARY BATTERY, LITHIUM SECONDARY BATTERY INCLUDING SAME, AND METHOD FOR PRODUCING SAME**

(30) Priority: 19.10.2021 KR 20210139178
(71) Applicant: Chang Sung Co., Cheongju-si, Chungcheongbuk-do 28146 (KR)
(72) Inventor: LEE, Tae Kyung, Incheon 22185 (KR); YANG, Seung Nam, Uiwang-si Gyeonggi-do 16021 (KR); CHOI, Nam Kyu, Incheon 21387 (KR)
(74) Representative: Stöckeler, Ferdinand
(86) International application number: PCT/KR2021/016874
(87) International publication number: WO 2023/068432

(57) **Abstract**

An embodiment of the present invention provides: a negative electrode active material for a lithium secondary battery, wherein the negative electrode active material has silicon nanoparticles distributed in a silicon alloy and contains a Si-Al-Ni-B composition; and a method for producing same. Accordingly, a negative electrode active material for a lithium secondary battery can be provided, wherein the negative electrode active material has a controlled volume expansion rate and excellent electrical properties.

## Description

### CROSS REFERENCE TO RELATED APPLICATION

The present application claims priority to Korean Patent Application No. 10-2021-0139178, filed October19, 2021, the entire contents of which is incorporated herein for all purposes by this reference.

### Technical Field

The present invention relates to a negative electrode active material of a lithium secondary battery and, more specifically, the present invention relates to a silicon alloy negative electrode active material used to improve the capacity of a lithium secondary battery, a lithium secondary battery employing the same, and a method for producing the negative electrode active material.

### Background Art

As the need for secondary batteries is highlighted in an eco-friendly electric vehicle and large-capacity energy storage industries, the demand for improved lithium secondary battery performance and reliability is increasing, and in order to increase the energy density of lithium secondary batteries, research and development are underway to increase the capacity of positive and negative electrode active materials, increase the density of the current collector, thin the separation membrane, and increase the charge and discharge voltage.

Currently, the capacity of lithium secondary batteries is being improved by adding a small amount of silicon-based anode material to graphite. Non-carbon materials such as Si, Ge, and Sn have an energy density that is more than 10 times higher than that of graphite, thereby being advantageous in expanding the driving range of electric vehicles, and due to the superior capacity thereof, the electrode can be designed thinly and the charging performance of the battery can be improved, which is advantageous for rapid charging.

However, while the volume expansion rate of graphite is 10-15% during the charging and discharging process, the volume expansion rate of the silicon-based materials reaches 200-300%, which can cause a rapid decrease in capacity due to this expansion. Accordingly, various alloys and composites are being studied to overcome the above problems, but the results are still insufficient.

Currently, silicon-based anode materials usable in lithium secondary batteries include silicon oxide, nano-silicon carbon composite, and silicon alloy. The silicon oxide has been commercialized for eco-friendly electric vehicles, and nano-silicon carbon composite has been commercialized for eco-friendly electric vehicles, power tools, and electric bicycles. However, silicon alloys still have many problems to solve in terms of a mass-production technology.

Silicon oxide (patent 10-2018-0106485) has a volume change of about 160%, which is smaller than that of silicon, so that stable cycle characteristics are ensured; however, there is a problem with low initial battery efficiency due to the formation of lithium oxide (Li₂O) and lithium silicon oxide during the initial cycle, resulting in low initial charge and discharge efficiency. In addition, in a process of heating SiO₂ with metal at high temperature and pressure, the problem of metal explosion and the difficulty of mass-production are problems that must be solved in the future, and the material price is also about 8-10 times more expensive, ranging from 70$/kg to 120$/kg compared to 8$/kg to 12$/kg for graphite.

In the case of nanosilicon carbon composites, since the power to prevent the recovery and low yield of nanosilicon, the dispersion problem of nanosilicon, and silicon volume expansion are weaker than other methods and it is not possible to include a lot of silicon, there is a weakness in capacity maintenance.

With respect to a silicon alloy (patent 10-2009-0070538), through a method of rapidly cooling nanometer-sized silicon with an alloy to make the alloy surround the silicon, when compared to the case of nanosilicon carbon composite, the advantage is that nanosilicon is already dispersed within the silicide matrix. Attempts are being made to mass-produce silicon alloys using the melt spinning process; however, a decrease in yield occurs in the process of crushing the created ribbon to obtain the desired particle size, and there are obvious problems with the limitations of implementing mass-production of the melt spinning process itself.

Therefore, there is a need for a method of producing silicon-based negative electrode active material that is mass-producible and has high yield at the same time.

### <Related Art Document>

### <Patent Document>

(Patent Document 1) Korean Patent Registration No. 10-2285151

### Detailed Description of the Invention

### Technical Problem

An aspect of the present invention relates to a silicon alloy negative electrode active material for a lithium secondary battery negative electrode material, and is to provide a production method for producing a negative electrode active material that has high yield and is mass-producible.

The aspect of the present invention is not limited to that mentioned above, and other aspects not mentioned will be clearly understood by those skilled in the art from the description below.

### Technical Solution

To this end, an embodiment of the present invention provides a negative electrode active material for a lithium secondary battery, the negative electrode active material including: an alloy matrix including Si, Al, and Ni; and silicon nanoparticles dispersed in the alloy matrix, wherein the Al is 18 atomic% or more and 28 atomic% or less with respect to the total content, the Ni is 10 atomic% or more and 20 atomic% or less with respect to the total content, and the Si is the remainder.

In an embodiment of the present invention, the negative electrode active material for a lithium secondary battery may be characterized in that the Al is 23 atomic% or more and 27 atomic% or less with respect to the total content, and the Ni is 11 atomic% or more and 15 atomic% or less with respect to the total content.

In addition, in an embodiment of the present invention, the negative electrode active material for a lithium secondary battery may be characterized in that the negative electrode active material further includes boron, the boron being included in the alloy matrix and being 2 atomic% or more and 10 atomic% or less with respect to the total content.

In addition, in an embodiment of the present invention, the negative electrode active material for a lithium secondary battery may be characterized in that silicon included in the silicon nanoparticles is active silicon, and silicon included in the alloy matrix is inactive silicon.

In addition, in an embodiment of the present invention, the negative electrode active material for a lithium secondary battery may be characterized in that the silicon nanoparticles have a spherical shape, symmetrical oval shape, or asymmetric oval shape.

In addition, in an embodiment of the present invention, the negative electrode active material for a lithium secondary battery may be characterized in that the silicon nanoparticles have a crystal size of 200 nm or less.

To this end, another embodiment of the present invention provides a method for producing a negative electrode active material for a lithium secondary battery, the method including: a melting step of placing a first material including Si, a second material including Al, and a third material including Ni in a reaction vessel and heating the same to form a metal melt; and an atomizing step of spraying the metal melt through a nozzle hole and cooling the sprayed metal melt by spraying a dispersion medium to solidify the metal melt into silicon alloy powder, wherein the Al in the metal melt is set to be 18 atomic% or more and 28 atomic% or less with respect to the total atoms in the metal melt, the Ni in the metal melt is set to be 10 atomic% or more and 20 atomic% or less with respect to the total atoms in the metal melt, and the remainder is Si.

In an embodiment of the present invention, the method for producing a negative electrode active material for a lithium secondary battery may be characterized in that the Al in the metal melt is set to be 23 atomic% or more and 27 atomic% or less with respect to the total atoms in the metal melt, the Ni in the metal melt is set to be 11 atomic% or more and 15 atomic% or less with respect to the total atoms in the metal melt, and the remainder is Si.

In addition, in an embodiment of the present invention, the method for producing a negative electrode active material for a lithium secondary battery may be characterized in that in the melting step, a fourth material including boron is placed in the reaction vessel and melted together.

In addition, in an embodiment of the present invention, the method for producing a negative electrode active material for a lithium secondary battery may be characterized in that the material including boron is one selected from the group consisting of boron (B), boric acid (H₃BO₃), boron carbide (B₄C), ferro boron, nickel boron (NiB), boron nitride (BN), and a mixture comprising two or more thereof.

In addition, in an embodiment of the present invention, the method for producing a negative electrode active material for a lithium secondary battery may be characterized in that the boron in the metal melt is made to be 2 atomic! or more and 10 atomic! or less with respect to the total atoms in the metal melt.

In addition, in an embodiment of the present invention, the method for producing a negative electrode active material for a lithium secondary battery may be characterized in that the dispersion medium comprises at least one selected from the group consisting of water, nitrogen, and elements of group 18 of the periodic table of elements.

In addition, in an embodiment of the present invention, the method for producing a negative electrode active material for a lithium secondary battery may be characterized in that the dispersion medium is maintained at 20°C or less.

In addition, in an embodiment of the present invention, the method for producing a negative electrode active material for a lithium secondary battery may be characterized in that the atomizing step involves rapid cooling at a rapid cooling rate of 10⁵ °C/sec or more.

To this end, another embodiment of the present invention provides a lithium secondary battery including: a negative electrode including the negative electrode active material of a lithium secondary battery of the previous embodiment; a conductive material; a positive electrode; a separation membrane; and an electrolyte.

In an embodiment of the present invention, the lithium secondary battery may be characterized in that the lithium secondary battery is in the form of a coin cell.

### Advantageous Effects

According to an embodiment of the present invention, it is possible to provide a negative electrode active material for a lithium secondary battery, wherein the negative electrode active material has a controlled volume expansion rate and excellent electrical properties.

In addition, according to an embodiment of the present invention, it is possible to provide a production method for producing a negative electrode active material for a lithium secondary battery, wherein high yield is ensured and mass-production is possible.

The effects of the present invention are not limited to the effects described above, but should be understood to include all effects that are inferable from the configuration of the invention described in the detailed description or claims of the present invention.

### Brief Description of the Drawings

FIG. 1 is a diagram showing a FE-SEM photograph of metal powder particles including boron tested in an experimental example.
FIGS. 2A and 2B are each a diagram showing a FE-SEM photograph tested in an experimental example.
FIGS. 3 and 4 are illustrative diagrams and FE-SEM photographs of silicon alloy powder particles 300 for a negative electrode active material of a lithium secondary battery provided by an embodiment of the present invention.
FIG. 5 is a diagram showing a flowchart of a method for producing silicon alloy powder 400 provided in an embodiment of the present invention.
FIG. 6 is a diagram showing the results of particle size analysis of silicon alloy powder through an optical diffraction experiment.
FIG. 7 is a diagram showing the results of X-ray diffraction pattern analysis in Experimental Example 1.2.
FIG. 8 is a diagram showing the results of analysis using a transmission electron microscope in Experimental Example 1.3.
FIG. 9 is a diagram showing the results of an experiment confirming an initial charge/discharge curve of a coin cell produced in Experimental Example 2.5.
FIG. 10 is a diagram showing the experimental results of Experimental Example 2.6.
FIGS. 11A and 11B is each a diagram showing the results of measuring a capacity maintenance rate by cycle of a coin cell produced in Experimental Example 3.

### Mode for Carrying Out the Invention

Hereinafter, the present invention will be described with reference to the accompanying drawings. However, the present invention may be implemented in various different forms and, therefore, is not limited to the embodiments described herein. In addition, in order to clearly explain the present invention in the drawings, portions unrelated to the description are omitted, and similar portions are given similar reference numerals throughout the specification.

Throughout the specification, when a portion is said to be "connected (linked, contacted, combined)" with another portion, this includes not only a case of being "directly connected" but also a case of being "indirectly connected" with another member in between. In addition, when a portion is said to "include" a certain component, this does not mean that other components are excluded, but that other components may be added, unless specifically stated to the contrary.

The terms used herein are merely used to describe specific embodiments and are not intended to limit the present invention. Singular expressions include plural expressions unless the context clearly dictates otherwise. In this specification, it should be understood terms such as "include" or "have" are to designate the presence of features, numbers, steps, operations, components, parts, or combinations thereof described in the specification, but are not to exclude in advance the possibility of the presence or addition of one or more other features, numbers, steps, operations, components, parts, or combinations thereof.

**Hereinafter, embodiments of the present invention will be described in detail with reference to the accompanying drawings.**

In this specification, "silicon nanoparticles" refers to fine particles including silicon and particles having nano or micro units. Although the expression nano is used, the unit does not necessarily mean only particles in the nm unit, and refers to fine particles including silicon dispersed in an alloy matrix 200.

An embodiment of the present invention provides a negative electrode active material 400 for a lithium secondary battery, the negative electrode active material including: an alloy matrix 200 including Si, Al, and Ni; and silicon nanoparticles 100 dispersed in the alloy matrix 200, wherein the Al is 18 atomic% or more and 28 atomic% or less with respect to the total content, and the Ni is 10 atomic% or more and 20 atomic% or less with respect to the total content.

At this time, the negative electrode active material 400 is a material made up of silicon alloy powder particles 300 for individual negative electrode active materials, and individual silicon alloy powder particles 300 are composed of silicon nanoparticles 100 and an alloy matrix 200.

**Hereinafter, the composition ratio of the silicon alloy powder particles 300 for a negative electrode active material of a lithium secondary battery will be described.**

In the silicon alloy powder particles 300, aluminum may be 18 atomic% or more and 28 atomic% or less with respect to the total content in the silicon alloy powder particles 300, nickel may be 10 atomic% or more and 20 atomic% or less with respect to the total content in the silicon alloy powder particles 300, and the remainder may include silicon, boron to be described later, other compounds, or combinations thereof.

At this time, preferably, the aluminum may be 23 atomic% or more and 27 atomic% or less with respect to the total content in the silicon alloy powder particles 300, the nickel may be 11 atomic% or more and 15 atomic% or less with respect to the total content in the silicon alloy powder particles 300, and the remainder may include silicon, boron to be described later, other compounds, or combinations thereof.

As can be seen through an experimental example to be described later, if the proportion of aluminum in the silicon alloy powder particles 300 is less than 18 atomic%, the relatively increased silicon content is advantageous in terms of reversible capacity; however, as the number of silicon sites that can react with lithium increases, a problem occurs in which the capacity maintenance rate decreases due to silicon volume expansion when charging the battery, and if the proportion of aluminum exceeds 28 atomic%, a problem occurs in which the reversible capacity decreases due to the relative decrease in the silicon content.

In addition, as can be seen through an experimental example to be described later, if the ratio of nickel is less than 10 atomic%, the reversible capacity increases; however, a problem occurs in which the capacity maintenance rate decreases, and even when the nickel ratio exceeds 20 atomic%, a problem of reduced reversible capacity and capacity maintenance occurs.

The effects of the content ratio of aluminum and nickel are maximized when the ratio of aluminum is 23 atomic% or more and 27 atomic% or less with respect to the total content, and the nickel is 11 atomic% or more and 15 atomic% or less with respect to the total content.

**Hereinafter, boron in the silicon alloy powder particles 300 for a negative electrode active material of a lithium secondary battery and the effects of boron will be described.**

In an embodiment of the present invention, the silicon alloy powder particles 300 may further include boron, and the silicon nanoparticles 100 be dispersed in an alloy matrix 200 including an alloy including any one or more of silicon, aluminum, nickel, and boron.

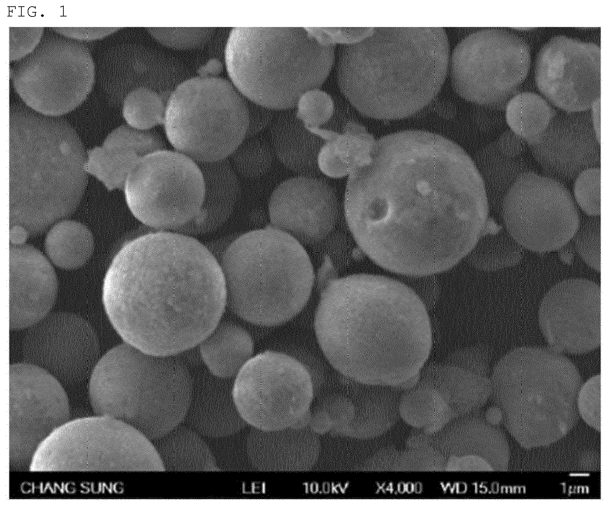

FIG. 1 is a diagram showing a FE-SEM photograph of metal powder particles including boron tested in an experimental example.

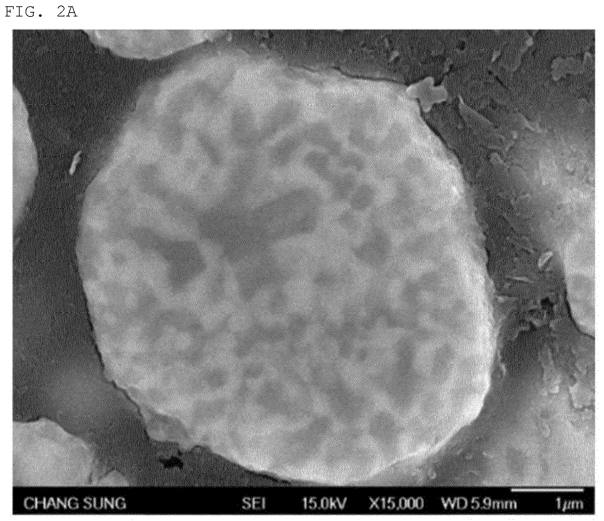

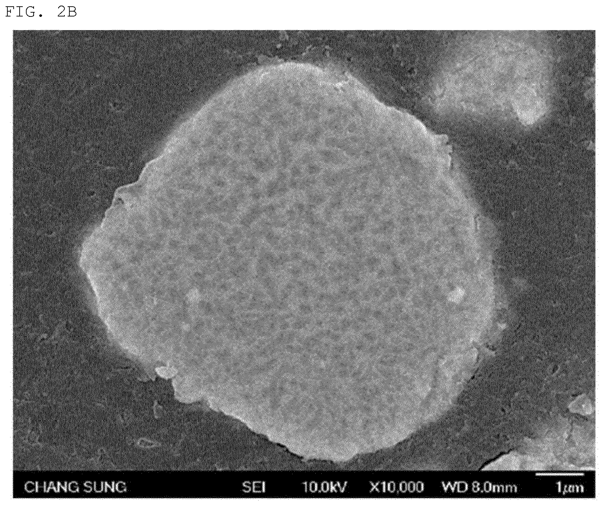

FIGS. 2A and 2B are each a diagram showing a FE-SEM photograph tested in an experimental example. FIG. 2A is a FE-SEM photograph of silicon alloy powder particles not including B, and FIG. 2B is a diagram showing a FE-SEM photograph of silicon alloy powder particles including B.

As can be seen through FIGS. 1 and 2, the silicon alloy powder particles 300 including boron may also have a spherical shape, and likewise, when boron is included in the silicon alloy powder particles 300, as can be seen through an experimental example to be described later, the crystal size of the silicon nanoparticles 100 decreases and silicon becomes finer, so that the crystal distribution of the silicon nanoparticles 100 increases.

In addition, accordingly, the negative electrode active material including the silicon alloy powder particles 300 for a negative electrode active material of a lithium secondary battery provided in an embodiment of the present invention has the improved reversible capacity, efficiency, and capacity maintenance rate.

At this time, the boron may be 2 atomic% or more and 10 atomic% or less in the silicon alloy powder particles 300 with respect to the total content in the silicon alloy powder particles 300. If the boron content in the silicon alloy powder particles 300 is less than 2 atomic%, the boron content is excessively low, so that the effect of adding boron does not occur. Conversely, if the boron content in the silicon alloy powder particles 300 exceeds 10 atomic%, the brittleness of silicon alloy powder 400 increases, causing part of the silicon alloy powder 400 to break during the pressing process to secure density. Accordingly, it is desirable that the content of boron in the silicon alloy powder particles 300 be 2 atomic% or more and 10 atomic% or less with respect to the total content in the silicon alloy powder particles 300.

In addition, the crystal size of the silicon nanoparticles 100 may vary depending on the boron content. Specifically, increasing the boron content provides the effect of increasing the probability of forming an amorphous phase, thereby reducing the crystal size. Conversely, if the boron content is reduced, the probability of forming an amorphous phase decreases, and the crystal size of the silicon nanoparticles 100 increases.

Using the above properties, a user can vary the content of boron depending on the type of electrode and negative electrode active material to be used, and produce and use silicon alloy powder particles 300 having a crystal size of silicon nanoparticles 100 suitable for use.

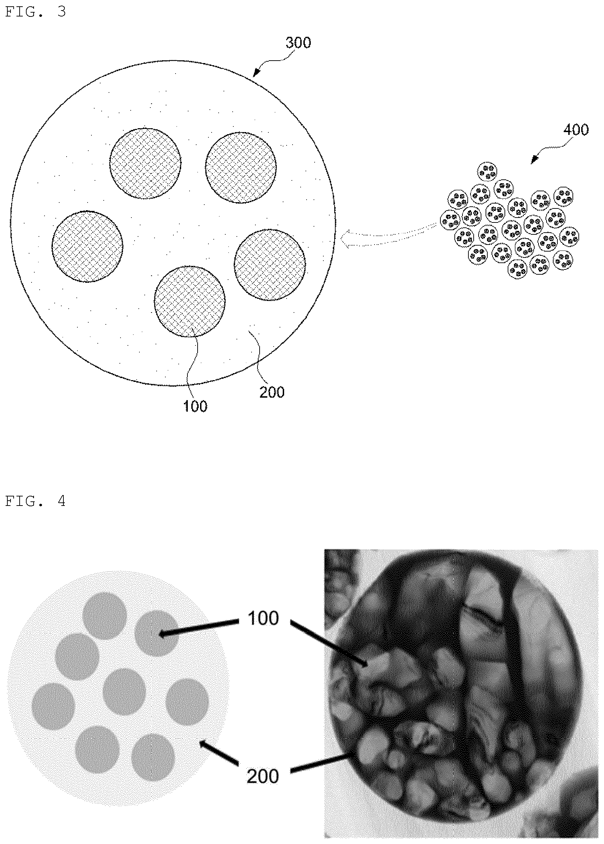

FIGS. 3 and 4 are illustrative diagrams and FE-SEM photographs of silicon alloy powder particles 300 for a negative electrode active material of a lithium secondary battery provided by an embodiment of the present invention.

**Hereinafter, with reference to** **FIGS. 3 and 4****, the structure of the negative electrode active material 400 of the lithium secondary battery and the effects of each structure will be described.**

As described above, the negative electrode active material 400 includes individual silicon alloy powder particles 300 for a negative electrode active material.

At this time, the negative electrode active material 400 including silicon-based materials has a volume expansion rate of 200% to 300% during the charging and discharging process, and controlling this volume expansion rate is recognized as a technical challenge.

At this time, as provided in an embodiment of the present invention, in the silicon alloy powder particles 300 for negative electrode active material of a lithium secondary battery, composed of an alloy matrix 200 and silicon nanoparticles 100 dispersed in the alloy matrix 200, the volume expansion of the silicon nanoparticles 100 is controllable by the alloy matrix 200.

Silicon, aluminum, nickel, and boron have atomic radii of 117 pm, 143 pm, 125 pm, and 88 pm, respectively, and likewise, lattice strain occurs in which the arrangement of surrounding atoms is distorted due to the difference in atomic radius. This lattice deformation may result in a disordered state in which atoms are not arranged regularly, resulting in an amorphization effect; a refined structure of silicon nanoparticles (100) is possible therethrough.

Likewise, the silicon nanoparticles 100 dispersed in the alloy matrix 200 may have a predetermined shape, and at this time, shapes therefor may be uniform or nonuniform, wherein the specific form of the above shapes may be, for example, a shape close to a sphere, such as a sphere, a symmetrical oval shape, or an asymmetric oval shape, and is preferably a sphere, but is not limited to the above examples.

In addition, the silicon nanoparticles 100 are particles dispersed in the alloy matrix 200, the particles should be nano-unit (nm) or micro-unit (µm) in size smaller than or equal to the pores of the alloy matrix 200. In an embodiment of the present invention, the silicon nanoparticles 100 were 200 nm or less, and of course, the present invention is not limited to the above embodiment.

In addition, the silicon alloy powder particles 300 for the negative electrode active material of a lithium secondary battery may have an average particle size (D 50) of 5 µm or more and 7 µm or less. If the average particle size of the silicon alloy powder particles 300 is less than 5 µm, the specific surface area increases, causing the problem of having to add a binder. Due to the small powder size, there is a high possibility that the powder particles will not be sufficiently dispersed among each other, and when the electrode is produced, the movement of the electrolyte may be very difficult, which may lead to difficulties in ion performion, causing a problem of reduced capacity development of the battery. If the average particle size exceeds 7 um, an ion diffusion problem may occur due to an increase in the diffusion length of lithium ions. When mixed with natural graphite, an intercalation problem may occur. It is most preferable that the size is 5 um or more and 7 µm or less, but it is clear that the size is not limited to the above numerical range.

**Hereinafter, the functions of silicon in the silicon alloy powder particles 300 for the negative electrode active material of a lithium secondary battery will be described.**

In this specification, "active silicon" refers to the silicon portion that can react with lithium ions when the silicon alloy powder particles 300 are used as a negative electrode active material of a lithium secondary battery, and conversely, "inactive silicon" refers to the portion of silicon that has low reactivity with lithium ions when used in the negative electrode active material of a lithium secondary battery.

As described above, the silicon alloy powder particles 300 for a negative electrode active material of a lithium secondary battery may be composed of a ternary system of Si-Al-Ni that does not include boron, or a four-component system of Si-Al-Ni-B that includes boron.

At this time, in the silicon alloy powder particles 300 for a negative electrode active material of a lithium secondary battery, having the three-component system and the four-component system, silicon is composed of active silicon and inactive silicon, wherein at this time, the silicon in the alloy matrix 200 becomes inactive silicon, and the silicon in the silicon nanoparticles 100 becomes active silicon.

Therefore, when the silicon alloy powder particles 300 are used as a negative electrode active material in the future, the active silicon in the silicon nanoparticles 100 will play a role of reacting with lithium ions, and the inert silicon in the alloy matrix 200 plays a role of controlling the volume expansion of silicon.

**Hereinafter, a method for producing the silicon alloy powder 400 will be described.**

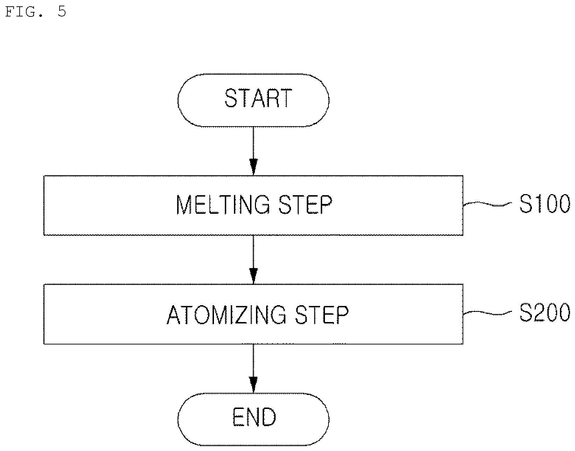

FIG. 5 is a diagram showing a flowchart of a method for producing silicon alloy powder 400 provided in an embodiment of the present invention.

As can be seen through FIG. 5, in another embodiment of the present invention, provided is a method for producing a negative electrode active material for a lithium secondary battery, the method including: a melting step S100 of placing a first material comprising Si, a second material comprising Al, and a third material comprising Ni in a reaction vessel and heating the same to form a metal melt; and an atomizing step S200 of spraying the metal melt through a nozzle hole and cooling the sprayed metal melt by spraying a dispersion medium to solidify the metal melt into silicon alloy powder, wherein the Al in the metal melt is set to be 18 atomic% or more and 28 atomic% or less with respect to the total atoms in the metal melt, the Ni in the metal melt is set to be 10 atomic% or more and 20 atomic% or less with respect to the total atoms in the metal melt, and the remainder is Si.

In the production method, after heating and melting the first to third materials including silicon, aluminum, and nickel in a single reaction vessel or crucible to form a metal melt (S100), only an atomizing step (S200) of spraying the metal melt through a nozzle hole and rapidly cooling the sprayed metal melt through a dispersion medium is included. Thus, the process steps are simple, making it possible to produce large-capacity silicon alloy powder 400.

**Hereinafter, the melting step (S100) will be described.**

In the melting step S100, the first material including Si, the second material including Al, and the third material including Ni are placed in a reaction vessel and heated to form a metal melt.

At this time, in the melting step S100, the boron-including material may be placed in the reaction vessel and melted together.

In the melting step, when a fourth material including boron is placed in the reaction vessel, the negative electrode active material 400 of a lithium secondary battery including boron is ultimately produced. Conversely, if the fourth material including boron is not placed in the reaction vessel, the negative electrode active material 400 of a lithium secondary battery that does not ultimately include boron is produced.

These are silicon alloy powders corresponding to the silicon alloy powder particles 300 for the negative electrode active material of a lithium secondary battery described above, and the features there are replaced by the above description.

**Hereinafter, the atomizing step S200 will be described.**

In this specification, "atomizing" refers to a process method that collectively refers to both a water spray method and a gas spray method, which is one of the methods of producing metal powder by applying mechanical energy from the outside to liquid metal.

Accordingly, in the atomizing step S200, the metal melt including the first to third materials or the first to fourth materials is sprayed through the nozzle hole, and at the same time, the dispersion medium is sprayed on the sprayed metal melt to rapidly cool the metal melt and solidify the metal melt into the silicon alloy powder 400.

At this time, in the atomizing step S200, by including a process in which the metal melts are sprayed through the nozzle hole and at the same time the dispersion mediums are sprayed into the metal melts, the metal melts collide with the high-pressure, low-temperature dispersion mediums and go through dropletization and micronization steps, and rapid cooling occurs during this process. Thus, it is possible to provide the effect of suppressing the growth of active silicon crystals in the metal melts, and ultimately, within the silicon alloy powder 400, the silicon nanoparticles 100 may be dispersed within the alloy matrix 200.

At this time, the dispersion medium to be sprayed must be made of materials that do not undergo other side reactions with the metal melt, and for example, may include one or more selected from the group consisting of water, nitrogen, and elements of group 18 of the periodic table of elements, but is not limited to the above examples.

In addition, the sprayed dispersion medium must have a cooling temperature capable of rapidly cooling the metal melt to be cooled, and the cooling temperature is preferably maintained at 20°C or lower. When the cooling temperature exceeds 20°C, the cooling temperature is excessively high, resulting in an increase in the crystal size of silicon nanoparticles.

In addition, the rapid cooling in the atomizing step S200 may be viewed from the perspective of cooling rate. The atomizing step is producing the negative electrode active material 400 of a lithium secondary battery through rapid cooling, and at this time, it is preferable that the cooling rate is rapid cooling at a cooling rate of 10⁵ °C/sec or more. When the cooling rate is less than 10⁵ °C/sec, a problem occurs in which the crystal size of silicon nanoparticles increases.

Another embodiment of the present invention provides a lithium secondary battery including: a negative electrode including the silicon alloy powder for a negative electrode active material of a lithium secondary battery of the embodiment; a conductive material; a positive electrode; a separation membrane; an and electrolyte.

At this time, except for the negative electrode active material, the conductive material, positive electrode, separation membrane, and electrolyte are items or materials that may be selected by those skilled in the art, and commonly distributed items or substances, as well as commercially available items or substances may be used therefor.

In addition, the lithium secondary battery may be in various forms, for example, a coin cell type or a full cell type, but is not limited to the above examples.

Hereinafter, the present invention will be described in more detail through examples, production examples, comparative examples, and experimental examples. However, the present invention is not limited to the following examples, production examples, comparative examples, and experimental examples.

### Production Example 1 - Negative electrode active material for lithium secondary battery not including boron

In this Production Example 1, a negative electrode active material for a lithium secondary battery that does not include boron, provided in an embodiment of the present invention, was produced.

The specific process is as follows.

After mixing the materials with the mixing ratios listed in Table 1 below, the materials were placed in a high-frequency melting furnace, and the temperature was raised to 1,500-1,550°C to melt the mixture to produce metal melts.

Afterwards, the metal melts were sprayed through a nozzle, and high-pressure cooling water was supplied to rapidly solidify the alloy. At this time, the cooling rate of rapid solidification was maintained at 10⁵°C/sec or more.

After undergoing the rapid solidification, the alloy powder was classified to produce silicon alloy powder with an average particle size (D₅₀) of about 5-7 um.

**[Table 1]**

| **entry** | **Si (atomic%)** | **Al (atomic%)** | **Ni (atomic%)** |
|---|---|---|---|
| **1** | 60 | 25 | 15 |
| **2** | 82 | 10 | 8 |
| **3** | 48 | 30 | 22 |
| **4** | 62 | 29 | 9 |

(The atomic % refers to the atomic % in the final silicon alloy powder particles.)

### Production Example2- Negative electrode active material for lithium secondary battery including boron

In Production Example 2, a negative electrode active material of a lithium secondary battery including boron, provided in an embodiment of the present invention, was produced.

As for the specific process, the production was performed in the same manner as in Production Example 1, except that only the ratio of materials was used as a mixture as summarized in Table 2 below.

**[Table 2]**

| **entry** | **Si (atomic%)** | **Al (atomic%)** | **Ni (atomic%)** | **B (atomic%)** |
|---|---|---|---|---|
| **A** | 60 | 23 | 15 | 2 |
| **B** | 60 | 27 | 11 | 2 |
| **C** | 60 | 18 | 11 | 11 |

### Experimental Example1 - Analysis of shape and particle size distribution of powder particles of negative electrode active material of lithium secondary battery including boron

### Experimental Example1.1 - Experiment to confirm shape and particle size distribution of negative electrode active material including boron

In Experimental Example 1, the powder of entryA of Production Example 2 was used to confirm the shape and particle size distribution of the powder particles of the negative electrode active material including boron.

The specific experimental method of Experimental Example 1 produced a mixture by mixing the negative electrode active materials produced in Production Example 1 and Production Example 2 with polyimide as a binder and carbon black as a conductive material at a weight ratio of 70:10:20.

Next, water was added to the mixture to adjust the viscosity to produce a negative electrode active material slurry.

Next, the negative electrode active material slurry produced was applied onto a copper foil current collector to produce a negative electrode plate, and the coated negative electrode plate was dried and rolled to have a density of 1.6 g/cc.

Next, the dried negative electrode plate was heated at 350°C in an argon atmosphere for 2 hours, and then the plate was cut into 14 mm pieces to produce a negative electrode to be applied to a final coin cell.

Next, Li metal was used as a counter electrode and polypropylene was used as a separation membrane, and then an electrolyte was injected to produce a 2032 standard coin cell.

FIG. 1 is a diagram showing a FE-SEM photograph, and FIGS. 2A and 2B are each a diagram showing a FE-SEM photograph tested in an experimental example. Specifically, FIG. 2A is a FE-SEM photograph of silicon alloy powder particles not including B, and FIG. 2B is a diagram showing a FE-SEM photograph of silicon alloy powder particles including B.

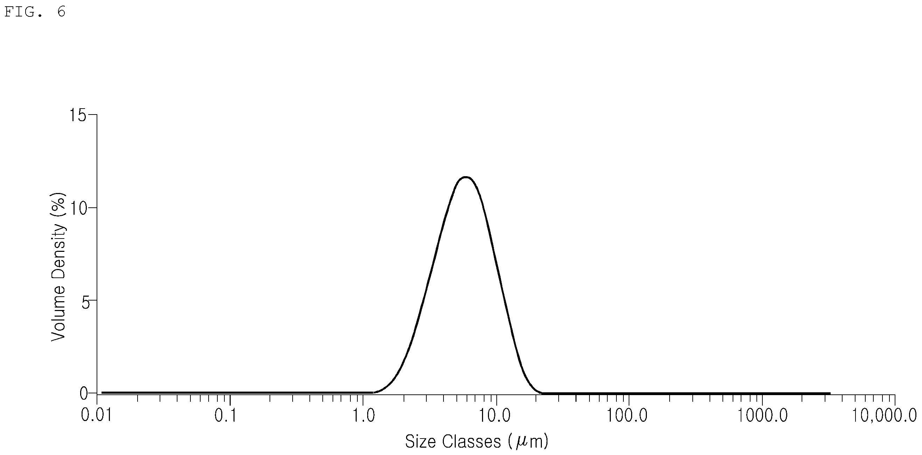

FIG. 6 is a diagram showing the results of particle size analysis of silicon alloy powder through an optical diffraction experiment.

As can be seen through FIGS. 1 and 6, the produced powder is generally in the form of powder having a spherical shape, and at this time, the average particle size (D₅₀) of the powder particles was measured to be 5 µm to 7 pm, as can be seen through optical diffraction experiments.

In addition, as can be seen through FIG. 2, compared to the FE-SEM photograph of entry 1 of Production Example 1, when boron is added to the Si-Al-Ni alloy composition, the crystal size of silicon nanoparticles decreases and the overall size becomes finer, and as the silicon crystal distribution increased, the reversible capacity, efficiency, and capacity maintenance rate were improved, as confirmed in an experimental example to be described later.

### Experimental Example1.2 - Crystal structure confirmation experiment of negative electrode active material including boron

In Experimental Example 1.2, an X-ray diffraction pattern was analyzed to analyze a crystal structure of entryA of Production Example 2.

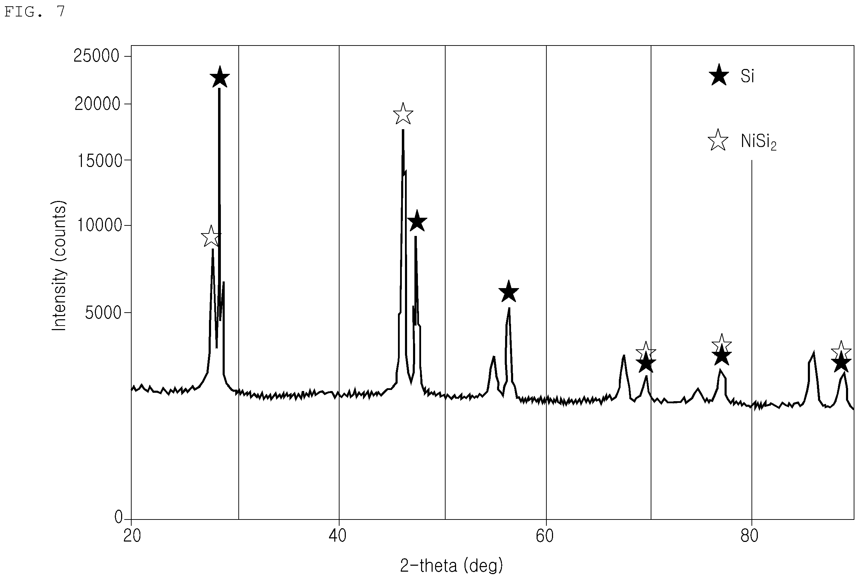

FIG. 7 is a diagram showing the results of X-ray diffraction pattern analysis in Experimental Example 1.2.

Through FIG. 7, a peak attributed to Si crystal appears around the diffraction angle (2q) of 28.5°, and a peak attributed to NiSi₂ crystal appears around the diffraction angle (2q) of 46.6°, so that the inclusion of silicide of NiSi₂ and crystalline Si can be confirmed therefrom.

The silicon crystal size in the obtained silicon alloy was analyzed as 100-200 nm by the Scherrer equation by applying the full width at half maximum (FWHM) of the peak attributable to Si 111 in the X-ray diffraction pattern.

### Experimental Example1.3 - Microstructure confirmation experiment of negative electrode active material including boron

In Experimental Example 1.3, the microstructure of entryA of Production Example 2 was analyzed using a transmission electron microscope.

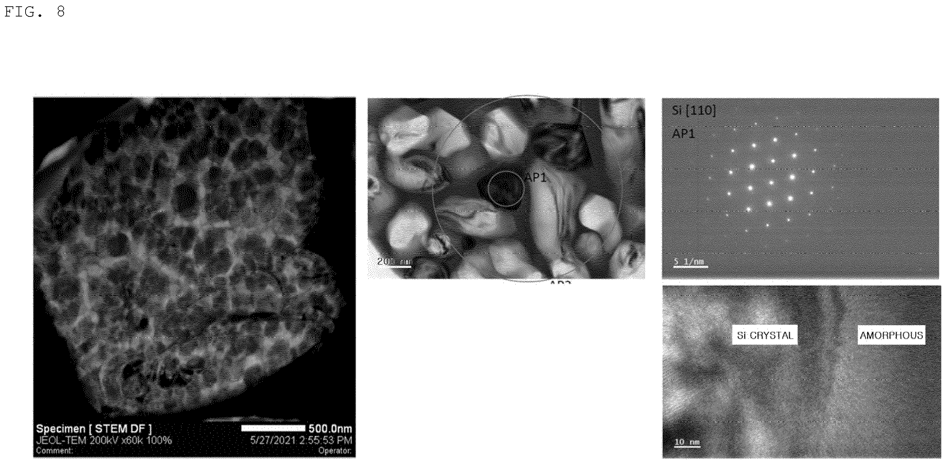

FIG. 8 is a diagram showing the results of analysis using a transmission electron microscope in Experimental Example 1.3.

As can be seen in FIG. 8, the dark area was confirmed to be single crystal silicon, and the bright area was confirmed to be silicide of NiSi₂.

In addition, silicon is distributed from the surface to the inside, and as a result of image analysis, the crystal size of silicon nanoparticles was analyzed to be approximately 100-200 nm. The silicon showed a mixed form of crystalline and amorphous.

### Production Example3 - Production of coin cell (half cell)

In Production Example 3, a coin cell (half cell) was produced using the negative electrode active materials for a lithium secondary battery produced in Production Example 1 and Production Example 2.

The specific process produced a mixture by mixing the negative electrode active materials produced in Production Example 1 and Production Example 2 with polyimide as a binder and carbon black as a conductive material at a weight ratio of 70:10:20.

Next, water was added to the mixture to adjust the viscosity to produce a negative electrode active material slurry.

Next, the negative electrode active material slurry produced was applied onto a copper foil current collector to produce a negative electrode plate, and the coated negative electrode plate was dried and rolled to have a density of 1.6 g/cc.

Next, the dried negative electrode plate was heated at 350°C in an argon atmosphere for 2 hours, and then the plate was cut into 14 mm pieces to produce a negative electrode to be applied to a final coin cell.

Next, Li metal was used as a counter electrode and polypropylene was used as a separation membrane, and then an electrolyte was injected to produce a 2032 standard coin cell.

At this time, the used electrolyte was obtained by adding 10% of FEC, an electrolyte additive, to a mixed solvent of ethylene carbonate and diethyl carbonate, and dissolving LiPF₆ to a concentration of 1.0M.

### Experimental Example2 - Experiment to confirm charging capacity, reversible capacity, initial efficiency, and capacity maintenance rate

In Experimental Example 2, an experiment was performed to confirm the charging capacity, reversible capacity, initial efficiency, and capacity maintenance rate using the coin cell produced in Production Example 3.

### Experimental Example 2.1 - Confirmation experiment of charging capacity

In Experimental Example 2.1, an experiment was performed to confirm the charging capacity using the above coin cells.

The charging capacity refers to the amount of electricity the battery can store, and
at this time, the experiment to confirm the charging capacity was performed through a constant current/constant voltage test method, which is a method mainly applied to materials that repeat insertion/desorption of lithium ions. When a current in the discharge direction is made to flow consistently, the voltage of the battery decreases, and when the voltage decrease exceeds 1.5V, which is a specific voltage (cut-off voltage), discharging stops. Capacity was measured from the amount discharged during this time. A measurement method for confirming the capacity of the embodiment and comparative example experiments was to perform a formation process at a rate of 100 mA/g and measure the reversible capacity and initial efficiency to form a stable protective film (SEI Layer) on the coin cell, and the cycle characteristics were confirmed by performing charging and discharging 10 times at a rate of 200 mA/g.

### Experimental Example2.2 - Confirmation experiment of reversible capacity

In Experimental Example 2.2, an experiment was performed to confirm the reversible capacity using the above coin cells.

The reversible capacity refers to the capacity excluding the irreversible capacity from the charging capacity, and
at this time, the experiment to confirm the reversible capacity was performed through the battery characteristics test method in Experimental Example 2.1.

### Experimental Example2.3 - Confirmation experiment of initial efficiency

In Experimental Example 2.3, an experiment to confirm the initial efficiency using the above coin cells was performed.

The initial efficiency refers to the ratio of the initial discharge capacity to the initial charge capacity, and at this time, an experiment to confirm the initial efficiency was performed through the battery characteristics test method in Experimental Example 2.1.

### Experimental Example2.4 - Confirmation experiment of capacity maintenance rate

In Experimental Example 2.4, an experiment was performed to confirm the capacity maintenance rate using the above coin cells.

The capacity maintenance rate refers to the ratio of the actual capacity to the design capacity of the secondary battery, and at this time, an experiment to confirm the capacity maintenance rate was performed through the battery characteristics test method in Experimental Example 2.1.

The charging capacity, reversible capacity, initial efficiency, and capacity maintenance rate confirmed through Experimental Example 2.1 to Experimental Example 2.4 are as summarized in Table 3 below, and entry1.1 to entry4.1 and entryA.1 to entryC.1 used in Table 3 below correspond to the entries of Production Example1 and Production Example2.

**[Table 3]**

| **entry** | **Charging capacity (mAh/g)** | **Reversible capacity (mAh/g)** | **Initial efficiency (%)** | **Capacity maintenance rate (%)** |
|---|---|---|---|---|
| **1.1** | 1,930 | 1,530 | 79 | 90 |
| **2.1** | 2,830 | 2,410 | 85 | 72 |
| **3.1** | 1,400 | 1,050 | 75 | 66 |
| **4.1** | 2,310 | 2,030 | 87 | 87 |
| **A.1** | 2,080 | 1,760 | 85 | 94 |
| **B.1** | 2,260 | 1,870 | 83 | 93 |
| **C.1** | 2,090 | 1,640 | 79 | 70 |

entryA.1 and entryB.1 both include 2 atomic% boron, wherein only the content ratio of aluminum and nickel is different at 23 atomic% and 15 atomic%, and 27 atomic% and 11 atomic%, respectively, and entryB.1 has a higher aluminum content. entry1.1 is a lithium secondary battery that does not include boron, and the aluminum content is 25 atomic% and the nickel content is 15 atomic!.

As can be seen through the experimental results in Table 3 above, the reversible capacity and efficiency improved as the Al content increased, and this is believed to be because Al itself reacted with lithium and acted as an active phase that indicates capacity.

In addition, Ni reacts with silicon to form a silicide-type intermetallic compound, wherein it is understood that as the Ni content decreases, the generation of intermetallic compounds decreases and the residual Si increases, acting as an active phase that reacts with lithium, thereby improving the initial capacity, initial efficiency, and cycle characteristics.

In addition, it is understood that a NiSi₂ phase, a silicide-type intermetallic compound formed by reacting with silicon, is excellent as an inactive phase that suppresses the volume expansion of the silicon active phase, and was able to control the volume expansion of silicon.

### Experimental Example2.5 - Experiment of initial charge/discharge curve

In Experimental Example 2.5, by using the coin cells of entry1.1 entryA.1 and entryB.1 produced in Production Example 3, an experiment was performed to confirm changes in the contents of aluminum and nickel and changes in electrochemical properties depending on the presence or absence of boron.

The specific experimental method is the same as Experimental Example 2.1.

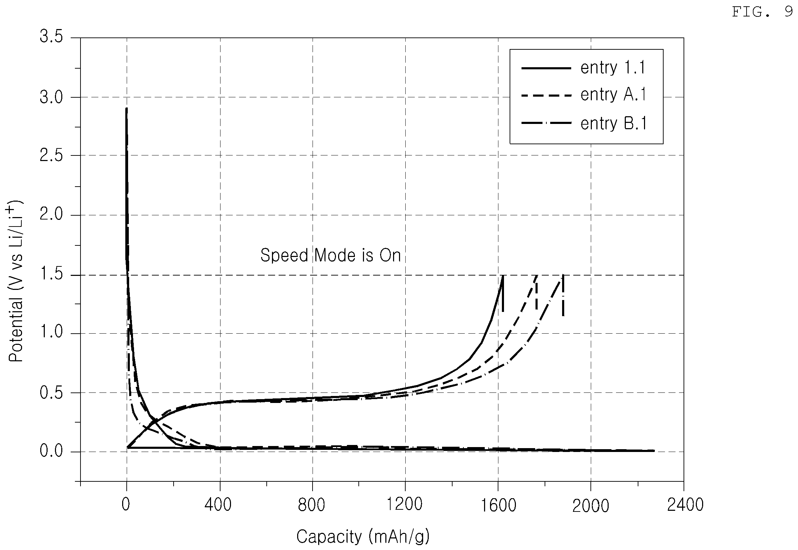

FIG. 9 is a diagram showing the experiment results of an initial charge/discharge curve of a coin cell produced in Experimental Example 2.5.

As can be seen through FIG. 9, by increasing the Al content in the Si-Al-Ni-B composition to 27at%, reversible capacity and efficiency were improved, and by reducing the Ni content to minimize the generation of intermetallic compounds, it was possible to improve properties by increasing residual Si.

### Experimental Example2.6 - Mechanical strength confirmation experiment

In Experimental Example 2.6, in a negative electrode active material including boron produced in Production Example 2, an experiment to confirm problems that occur when the boron content exceeds 11 atomic% was performed.

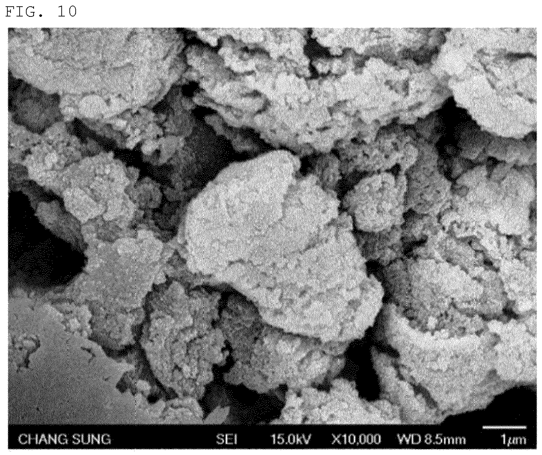

FIG. 10 is a diagram showing the experimental results of Experimental Example 2.6.

As can be seen through FIG. 10, when boron is included at 2 atomic%, the silicon crystal size is improved; however, when boron was included in excess of 11 at%, it was confirmed that the brittleness of the silicon alloy powder increased to cause some of the powder to be broken during a pressing process for securing density, and as new SEI layers continue to be formed on the surface of the silicon alloy due to this powder breakage, problems may arise in battery capacity maintenance due to increased SEI.

### Experimental Example3 - confirm capacity and efficiency changes according to charge/discharge cycle of lithium secondary battery

In Experimental Example 3, changes in capacity and efficiency according to the number of cycles were confirmed using a lithium secondary battery with various components.

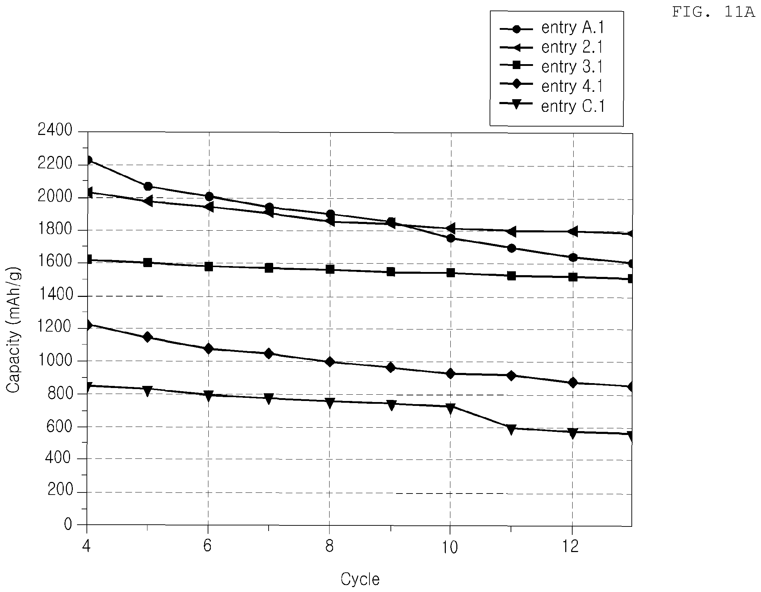

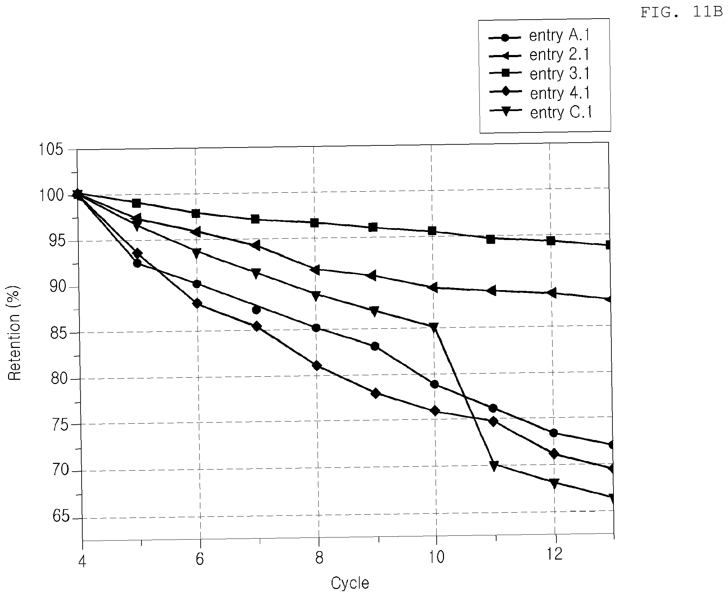

FIGS. 11A and 11B is each a diagram showing the results of Experimental Example 3.

The specific experimental method is the same as Experimental Example 2.1.

As can be seen through FIG. 11A, in the case of entryA.1 including boron, the capacity in the initial cycle was 1,760 mAh/g, and even at 13 cycles, the capacity was 1,515 mAh/g, so that it was found that very excellent capacity maintenance characteristics are shown.

In addition, as can be seen through FIG. 11B, in 10 cycle characteristics evaluations excluding battery formation, the capacity maintenance rate reached 94%, and it was found that lithiation and delithiation were very stable, showing excellent cycle performance.

### Comparative Example - Confirmation of charging capacity, reversible capacity, initial efficiency, and capacity maintenance rate according to boron content

In Comparative Example, in a lithium secondary battery (coin cell type) including boron, the charging capacity, reversible capacity, initial efficiency, and capacity maintenance rate were confirmed by varying the boron content.

In the production method of Comparative Example, production was performed in the same manner as in Production Example 1 above, except that the boron content was different. A coin cell was produced in the same manner as Production Example 3 above using the negative electrode active material produced therethrough.

The boron content is as summarized in Table 4 below.

**[Table 4]**

| **entry** | **Si (atomic%)** | **Al (atomic%)** | **Ni (atomic%)** | **B (atomic%)** |
|---|---|---|---|---|
| **i** | 60 | 25 | 15 | 0 |
| **ii** | 58 | 25 | 15 | 2 |
| **iii** | 56 | 25 | 15 | 6 |
| **iv** | 54 | 25 | 15 | 10 |
| **v** | 52 | 25 | 15 | 12 |

An experiment was performed in the same manner as Experimental Example 2 using coin cells produced using the above entries; the results are summarized in Table 5 below, and entryi above and entryi.1 below are written in the corresponding format.

**[Table 5]**

| **entry** | **Charging capacity (mAh/g)** | **Reversible capacity (mAh/g)** | **Initial efficiency (%)** | **Capacity maintenance rate (%)** |
|---|---|---|---|---|
| **i.1** | 1,930 | 1,530 | 79 | 90 |
| **ii.1** | 2,080 | 1,760 | 85 | 94 |
| **iii.1** | 2,030 | 1,685 | 83 | 85 |
| **iv.1** | 1,842 | 1,510 | 82 | 82 |
| **v.1** | 1,660 | 1,294 | 78 | 76 |

As can be seen through the results of the comparative example above, it was possible to secure a capacity maintenance rate of over 80% when the boron content was around 2 at% and around 10 at%, and it was confirmed that there was a significant difference in effect in terms of capacity maintenance rate depending on the boron content.

### Experimental Example4

In Experimental Example 4, an experiment was performed to confirm the reversible capacity and initial efficiency by varying the average particle size of the powder of the negative electrode active material including boron.

The specific experimental method was performed in the same manner as the experimental method in Experimental Example 2 above.

The experimental results of Experimental Example 4 are summarized in Table 6 below.

**[Table 6]**

| **Entry** | **Average particle size (µm)** | **Reversible capacity (mAh/g)** | **Initial efficiency (%)** |
|---|---|---|---|
| **Entry** 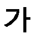 **(GA).1** | 2-3 | 1,410 | 80 |
| **Entry** 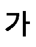 **(GA).2** | 5-7 | 1,760 | 85 |
| **Entry** 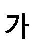 **(GA).3** | 10-12 | 1,520 | 81 |

As shown in Table 6 above, it is possible to see that when the average particle size is 5-7pm, the reversible capacity and initial efficiency provide the best effects.

The description of the present invention described above is for illustrative purposes, and those skilled in the art will understand that the disclosure is easily modifiable into other specific forms without changing the technical idea or essential features of the present invention. Therefore, the embodiments described above should be understood in all respects as illustrative and not restrictive. For example, each component described as single may be implemented in a distributed manner, and similarly, components described as distributed may also be implemented in a combined form.

The scope of the present invention is indicated by the claims described below, and all changes or modified forms derived from the meaning and scope of the claims and their equivalent concepts should be construed as being included in the scope of the present invention.

### <Explanation of reference numerals>

100: Silicon nanoparticles
200: Alloy matrix
300: Silicon alloy powder particles for negative electrode active material of lithium secondary battery
400: Negative electrode active material of lithium secondary battery

## Claims

1. A negative electrode active material for a lithium secondary battery, the negative electrode active material comprising: an alloy matrix comprising Si, Al, and Ni; and silicon nanoparticles dispersed in the alloy matrix, wherein the Al is 18 atomic% or more and 28 atomic% or less with respect to the total content, the Ni is 10 atomic% or more and 20 atomic% or less with respect to the total content, and the Si is the remainder.

2. The negative electrode active material for a lithium secondary battery according to claim 1, wherein the Al is 23 atomic! or more and 27 atomic% or less with respect to the total content, and the Ni is 11 atomic% or more and 15 atomic% or less with respect to the total content.

3. The negative electrode active material for a lithium secondary battery according to claim 1, wherein the negative electrode active material further comprises boron, the boron being included in the alloy matrix and being 2 atomic! or more and 10 atomic! or less with respect to the total content.

4. The negative electrode active material for a lithium secondary battery according to claim 1, wherein silicon included in the silicon nanoparticles is active silicon, and silicon included in the alloy matrix is inactive silicon.

5. The negative electrode active material for a lithium secondary battery according to claim 1, wherein the silicon nanoparticles have a spherical shape, symmetrical oval shape, or asymmetric oval shape.

6. The negative electrode active material for a lithium secondary battery according to claim 1, wherein the silicon nanoparticles have a crystal size of 200 nm or less.

7. A method for producing a negative electrode active material for a lithium secondary battery, the method comprising: a melting step of placing a first material comprising Si, a second material comprising Al, and a third material comprising Ni in a reaction vessel and heating the same to form a metal melt; and an atomizing step of spraying the metal melt through a nozzle hole and cooling the sprayed metal melt by spraying a dispersion medium to solidify the metal melt into silicon alloy powder, wherein the Al in the metal melt is set to be 18 atomic! or more and 28 atomic% or less with respect to the total atoms in the metal melt, the Ni in the metal melt is set to be 10 atomic% or more and 20 atomic% or less with respect to the total atoms in the metal melt, and the remainder is Si.

8. The method for producing a negative electrode active material for a lithium secondary battery according to claim 7, wherein the Al in the metal melt is set to be 23 atomic! or more and 27 atomic% or less with respect to the total atoms in the metal melt, the Ni in the metal melt is set to be 11 atomic% or more and 15 atomic% or less with respect to the total atoms in the metal melt, and the remainder is Si.

9. The method for producing a negative electrode active material for a lithium secondary battery according to claim 7, wherein in the melting step, a fourth material comprising boron is placed in the reaction vessel and melted together.

10. The method for producing a negative electrode active material for a lithium secondary battery according to claim 9, wherein the material comprising boron is one selected from the group consisting of boron (B), boric acid (H₃BO₃), boron carbide (B₄C), ferro boron, nickel boron (NiB), boron nitride (BN), and a mixture comprising two or more thereof.

11. The method for producing a negative electrode active material for a lithium secondary battery according to claim 9, wherein the boron in the metal melt is made to be 2 atomic% or more and 10 atomic% or less with respect to the total atoms in the metal melt.

12. The method for producing a negative electrode active material for a lithium secondary battery according to claim 7, wherein the dispersion medium comprises at least one selected from the group consisting of water, nitrogen, and elements of group 18 of the periodic table of elements.

13. The method for producing a negative electrode active material for a lithium secondary battery according to claim 7, wherein the dispersion medium is maintained at 20°C or less.

14. The method for producing a negative electrode active material for a lithium secondary battery according to claim 7, wherein the atomizing step involves rapid cooling at a rapid cooling rate of 10⁵ °C/sec or more.

15. A lithium secondary battery comprising: a negative electrode comprising the negative electrode active material of a lithium secondary battery of claim 1; a conductive material; a positive electrode; a separation membrane; and an electrolyte.

16. The lithium secondary battery according to claim 15, wherein the lithium secondary battery is in the form of a coin cell.
